## Europäisches Patentamt

## European Patent Office

## Office européen des brevets

(11) Publication number: **0 111 614**

**A1**

(12) **EUROPEAN PATENT APPLICATION**

(21) Application number: **82850268.2**

(22) Date of filing: **23.12.82**

(51) Int. Cl.³: **A 23 G 1/02**
**A 23 G 1/04**

(43) Date of publication of application:
**27.06.84 Bulletin 84/26**

(84) Designated Contracting States:
**BE CH DE FR GB IT LI NL SE**

(71) Applicant: **FAZER AB**
**N. Skolgatan 24 Box 7049**
**S-200 42 Malmö 7(SE)**

(72) Inventor: **Gullbransson, Lars**
**Stamhemsvägen 10**
**S-216 21 Malmö(SE)**

(72) Inventor: **Thuren, Karl-Eric Percy**
**Regementsgatan 19**
**S-217 53 Malmö(SE)**

(72) Inventor: **Schultz, Carl Gustaf Peter**
**Kämpagränd 7B**
**S-223 76 Lund(SE)**

(74) Representative: **Nilsson, Brita et al,**
**AWAPATENT AB Box 5117**
**S-200 71 Malmö(SE)**

(54) **Cocoa powder, cocoa bean mass and process for their production.**

(57) Cocoa powder, cocoa bean mass and a process for their production by proceeding from press cake produced in the countries of origin and being of varying quality, are described. Cocoa powder and cocoa bean mass having a bacterial count far below that of the conventional products are achieved in that the press cake, after crushing into particles and adjustment of its water content and pH and/or the addition of other conventional substances affecting the coloration and flavour of the cocoa, are sterilized and dried. For the production of cocoa powder, the dry particles are cooled, whereupon their aroma and fat content are adjusted before they are pulverized and tempered in conventional manner. For the production of cocoa bean mass, the sterilized, dry cocoa particles are mixed with a selected edible fat, such as cocoa butter, and optionally other additives having a given low bacterial count, before imparting to said mass a fineness of 99% below 100 μm and tempering and blocking said mass in conventional manner.

1

## COCOA POWDER, COCOA BEAN MASS AND PROCESS FOR THEIR PRODUCTION

The present invention relates to cocoa powder and cocoa bean mass of good bacteriological standard, and to a process for their production by proceeding from natural press-cake from the countries of origin. In the present specification and claims, the term "cocoa bean mass" also comprises novel types of bean masses which may comprise edible fats other than cocoa butter.

In the production of cocoa powder and cocoa bean mass, one proceeds from the fruits of the tropical cacao tree, the beans of which are fermented and dried. The beans are then roasted in plants at a predetermined temperature and for a predetermined period of time in order to develop and refine their inherent cocoa aroma, whereupon the beans are cracked and dehusked in special winnowing machines. In the production of alkalized cocoa powder, the nibs are heat-treated with the addition of potash solution to pH $7.0 \pm 0.4$. The nibs are then dried to minimum water content and milled. If, on the other hand, cocoa bean mass for the production of chocolate is to be produced, the nibs are milled to maximum fineness. After that, the cocoa bean mass is pressed and thus separated into press cake and cocoa butter. Cocoa butter is a much sought after commodity and important to chocolate production. The cocoa press cake is used for the production of cocoa powder.

In utilizing press cake produced in the countries of origin, certain difficulties are encountered. The quality in respect of flavour, fineness and bacteriological standard varies. Especially the bacterial content may be unsatisfactorily high.

To be able to produce high-quality cocoa powder and cocoa bean mass from the nonalkalized press cake, the press cake should for example satisfy the requirements of the following specification:

2

| | |
|---|---|
| Fat content: | 8-23%, usually 8-12% |
| Water content: | max. 6.0% |
| Shell content: | max. 2.0%, based upon cocoa nibs |
| Ash content: | max. 8.0%, based upon defatted powder |
| Fineness: | 99% below 75 µm |
| Flavour: | free from foreign flavour and odour |
| pH: | 5.5 ± 0.3 |
| Colour: | light-brown |
| Insect fragments: | max. 60/100 g |
| Rat hair: | max. 2/100 g |

Bacteriological standard:

| | |
|---|---|
| Total count: | max. 200,000/g |
| Yeasts: | max. 50/g |
| Moulds: | max. 50/g |
| Coliform bacteria: | max. 10/g |
| Escherichia coli: | if possible negative |
| Salmonella: | negative/25 g |

One object of the present invention is to provide cocoa powder and cocoa bean mass having a far higher bacteriological standard than exemplified in the above specification. The total count of bacteria should be below 5,000/g. In addition, the international requirements regarding flavour and fineness must be satisfied.

Another object of this invention is to provide a novel process for the production of high-quality cocoa powder and cocoa bean mass of adjusted flavour and good bacteriological standard, by proceeding from press cake of varying quality. The process comprises adjusting the water content and also the fat content by adding a selected edible fat. In addition, and if desired, the aroma may be adjusted by the addition of flavouring agents, and the wettability may be adjusted by the addition of emulsifiers.

The distinctive features of this invention reside in the sterilization of particulate cocoa and in the subsequent adjustment of the aroma and the fat content of the cocoa particles according to need. The characteristic features of the invention will appear from the appended claims.

The production process according to this invention proceeds from natural press cake of varying quality. The cocoa press cake is crushed in a coarse crusher to particle form. These particles are then conducted through a magnet to remove any metal fragments. The cocoa particles are then fed into a mixer which is supplied with a given amount of water and, if desired, with solutions of $K_2CO_3$, $Na_2CO_3$ or $(NH_4)_2CO_3$ to establish the required pH. Other additives, such as monosaccharides, common salt and organic acids permitted as food additives and affecting the colouring and flavour of the cocoa, may also be supplied according to need.

The water content of the cocoa particles is adjusted to 5-20% by weight. To facilitate reduction of the bacterial content, the moist and possibly alkalized cocoa particles are conveyed to a retarding container in which the residence time and also the temperature and the air humidity can be varied. The temperature usually lies between 60 and 95°C, and the residence time usually is between 0 and 1 hour.

The residence time and the temperature affect not only the bacterial content, but are also of importance to the colouring of the powder.

When the treatment of the cocoa particles in the retarding container is finished, the particles are supplied to a sterilizer operating at a temperature of 100-110°C and at a pressure which is atmospheric or slightly higher. In a preferred embodiment, the sterilizer is a continuous autoclave in which the operating temperature is 103 ± 2°C and the transit time is 5 ± 3 min. During passage through the sterilizer, the water content of cocoa particles is increased by means

4

of steam to a level which maximally is 10% by weight higher than the input value. By this treatment, any pathogenetic bacteria are eliminated, and the total count of bacteria is reduced to below 5,000/g.

The wet, hot cocoa particles are then dried to a water content of from 2 to 5%. The drying operation should take place in a sterile atmosphere, for instance in a fluidized bed with sterile-filtrated hot air. If necessary, the temperature may be somewhat increased at the end of the drying operation in order to enhance the cocoa flavour.

These dry cocoa particles are now used for the production of cocoa powder or cocoa bean masses.

For the production of cocoa powder, the dry, hot cocoa particles are then cooled to a temperature below 28°C. Cooling should be carried out in a dry and sterile atmosphere, for instance in a fluidized bed with cold, dehumidified and sterile-filtrated air. The cocoa particles are then conveyed to silos. The cocoa particles now have a water content of from 2 to 5% by weight, and their pH and ash content correspond to quality requirements. Furthermore, colour and flavour have been established. However, due to agglomeration, the fineness requirements are not satisfied. From the silos, the cocoa particles are portioned into a mixer in which water, fat, flavouring agents (such as vanillin) and emulsifiers, all having a given low bacterial count, can be dosed according to need. The fat must be an edible fat, such as cocoa butter of varying degrees of deodorization, or some other vegetable oil. For increased wettability, emsulsifiers, such as lecithin, monoglycerides etc., can be dosed and admixed.

After admixture of all ingredients, the treated cocoa particles are conveyed to a pulverizer to impart to the particles an acceptable fineness (99% below 75 μm). The finished powder is tempered in conventional manner to prevent lump formation, before it is packed in bags.

5

By this process, an acceptable cocoa powder of several different qualities can be produced. Some examples of cocoa powder qualities that can be produced by the process of the invention, are the following:

1. Cocoa powder having a fat content of from 10 to 12%, natural;

2. Cocoa powder having a fat content of from 10 to 12%, alkaline (several different qualities with different pH values, colours and aromas);

3. Cocoa powder having a fat content of from 10 to 12%, alkaline and with emulsifiers added;

4. Cocoa powder having a fat content of from 20 to 22%, alkaline and with aroma added.

For the production of cocoa bean mass, the sterilized and dried cocoa particles are placed in a mixer. The particles are hot after the drying operation and may be used directly, without cooling. An edible fat, preferably cocoa butter having a given degree of deodorization and/or in some cases some other vegetable fat is dosed into the mixer. The fat content is adjusted to from 45 to 60%, and the temperature is raised to from 40 to 95°C, preferably about 70°C. By this treatment, the agglomerates are dissolved, and a smooth cocoa bean mass is obtained. The mixer should be provided with a cover and vacuum facilities to prevent admixture of air. After treatment for a suitable period of time, usually about 15 min., a fineness of about 100 μm is imparted to the mass, for instance by conducting it through a ball mill and a vibrating screen. In order further to reduce the water content of the mass, it is preferably conducted through a thin-film evaporator before it is tempered and blocked in conventional manner.

By producing cocoa bean mass in the manner described above, it is possible to obtain a cocoa bean mass

6

which essentially corresponds to the cocoa bean mass one obtains by proceeding from cocoa beans, provided that non-deodorized cocoa butter is used. However, the mass produced according to the invention will have a far lower bacterial content than conventional cocoa bean mass. The flavour can be varied by using as raw material in the production of the cocoa particles according to the invention a press cake from different bean types. Cocoa particles of different origin may then be admixed, and furthermore deodorized cocoa butter may be employed.

It is also possible to produce novel types of bean masses containing, instead of all or part of the cocoa butter, substitute fats for cocoa butter (such as coberin). The fat portion may also consist of hydrogenated and fractionated vegetable oils, for instance for the production of icings or ice cream dip masses.

In addition, it is possible to supply other additives, such as emulsifiers or flavouring agents, provided that they have a given, low bacterial count.

Examples of cocoa bean mass and novel types of cocoa bean masses that can be produced by the present invention, are the following:

1. Reconstructed cocoa bean mass consisting of 51.5% by weight of the above-described, sterilized cocoa particles and 48.5% by weight of non-deodorized cocoa butter (or partially deodorized).

2. Basic mass for icing masses, consisting of 51.5% by weight of the above-described, sterilized cocoa particles and 48.5% by weight of fractionated palm-kernel fat.

3. Basic mass for the production of ice cream dip masses, consisting of 51.5% by weight of the above-described, sterilized cocoa particles and 48.5% by weight of coconut-soybean oil.

7

In all of the above cases there are obtained, in contrast to coventional cocoa bean masses, masses with very low bacterial counts.

EXAMPLE 1

500 kg of cocoa press cake having a water content of 3%, a fat content of 11% and a total count of bacteria of 50,000 per gram were crushed in a coarse crusher to a maximum size of 1 mm. The cocoa particles were then conveyed via a magnetic separator to a silo. From the silo, the particles were conveyed to a mixer into which potash dissolved in water was dosed to a water content of 10% by weight of the particles and a pH of 7.1. The residence time in the mixer was about 30 min. at a temperature of 80°C. The mixer was emptied by means of a screw conveyer into a continuous autoclave (Stork Continuous Processor, Stork, Amsterdam, operating pressure 1.01-1.4 bar).

In the autoclave, the temperature of the particles was raised to 103°C, and the transit time was 3.5 min. The water content of the particles had now been raised to 15% by weight, which was done by supplying steam. The wet particles were then conveyed to a fluidized bed where they were dried with the hot, sterile-filtrated air (temperature 80°C). The water content was reduced to 5% by weight, whereupon the cocoa particles were cooled in a continuous vibrating cooler by means of chilled, dried and sterile-filtrated air to 25°C. The cocoa particles now had a water content of 4.5% by weight.

From the vibrating cooler, the cocoa particles were conveyed to a silo and thence to a mixer where the fat content was adjusted to 20% by weight (by adding 56 kg of non-deodorized cocoa butter). If necessary, it is also possible at this stage to add water, flavouring agents and emulsifiers for increased instantness. All such additives should have a given, low bacterial count.

Lastly, the cocoa particles were pulverized to a fineness of 99% below 75 µm, and finally the powder was tempered and packed in bags in conventional manner.

8

In this manner, a cocoa powder of satisfactory flavour and colour had been obtained. Furthermore, the powder had the following accepted analysis values:

Fat content:      20.2%
Water content:    4.5% by weight
Fineness:         99% below 75 µm
Bacterial count:  Total plate count 3,500/g

Also the cocoa powder types mentioned under items 1-4 on page 5 were produced by this technique.

EXAMPLE 2

For the production of reconstructed cocoa bean mass, the same raw material as in Example 1 was used, although the cocoa particles had not been treated with $K_2CO_3$, but were sterilized and dried as in Example 1. In this case, the particles were dried to a water content of 3% by weight. The dry and still hot particles were weighed (267.5 kg) in a special mixer with heating and vacuum facilities. With the simultaneous addition of portions of 232.5 kg of non-deodorized cocoa butter, the mass was worked under the action of heat to about 70°C. To prevent the admixture of air, a weak vacuum was established in the mixer. After a working time of about 15 min., the particles had been distributed in the cocoa butter. The mass was then conveyed through a ball mill and vibrating screen to ensure a particle size of maximally 100 µm. The mass was then tempered and blocked in conventional manner.

To further decrease the water content of the mass in this instance, the mass was conveyed through a thin-film evaporator at 70°C under vacuum.

The produced cocoa bean mass had the following accepted analysis values:

Fat content:      53.0% by weight
Water content:    0.9% by weight
Fineness:         99% below 100 µm
Bacterial count:  Total plate count 2,000/g

In this manner, also the bean masses mentioned under items 1-3 on page 6 were produced.

## CLAIMS

1. Process for the production of high-quality cocoa powder of adjusted flavour and good bacteriological standard, by proceeding from a press cake of varying quality and a fat content of 8-23% by weight, by crushing the press cake into particles, magnetic separation of metal fragments, adjusting the water content to 5-20% by weight and, optionally, adding pH-controlling agents, such as $K_2CO_3$, $Na_2CO_3$, $(NH_4)_2CO_3$ or the like and/or other substances affecting the coloration and flavour of the cocoa, such as NaCl, monosaccharides, organic acids or the like permitted as food additives, storage in a retarding container at predetermined temperature and for a predetermined period of time, sterilizing, drying, cooling and, if desired, adjustment of the aroma, fat content and wettability, pulverizing and tempering, c h a r a c t e r i s e d  in that the cocoa particles are conveyed from the retarding container to a sterilizer operating at a temperature of 100-110°C and a pressure which is atmospheric or somewhat higher; that the water content of the cocoa particles is increased during sterilization by means of steam to a level which maximally is 10% by weight higher than the input value; that the sterilized cocoa particles are then dried to a water content of 2-5% by weight in a sterile atmosphere; that the hot particles are cooled to below 28°C; and that the aroma, fat content and wettability of the cocoa particles are then optionally adjusted in a mixer by adding selected flavouring agents, edible fats and emulsifiers.

2. Process for the production of high-quality cocoa bean mass of adjusted flavour, a fat content of 45-60% by weight and good bacteriological standard, by proceeding from a press cake of varying quality and a fat content of 8-23% by weight, by crushing the press cake into particles, magnetic separation of metal fragments, adjusting the water content to 5-20% by weight and, optionally, adding pH-controlling agents, such as $K_2CO_3$, $Na_2CO_3$, $(NH_4)_2CO_3$ or the like and/or other substances affecting the coloration and flavour of the cocoa, such as NaCl, monosaccharides, organic acids or the like permitted as food additives, storage in a retarding container at predetermined temperature and for a predetermined period of time, sterilizing, drying, admixing selected edible fats and, optionally, other additives having a given, low bacterial count, such as flavouring agents and emulsifiers, adjusting the fineness and, optionally, reducing the water content by means of a thin-film evaporator, tempering and blocking, c h a - r a c t e r i s e d in that the cocoa particles are conveyed from the retarding container to a sterilizer operating at a temperature of 100-110°C and a pressure which is atmospheric or somewhat higher; that the water content of the cocoa particles is increased during sterilization by means of a steam to a level which maximally is 10% by weight higher than the input value; that the sterilized cocoa particles are then dried to a water content of 2-5% by weight in a sterile atmosphere; that the dry particles are dosed into a mixer to which also a selected edible fat and, optionally, other additives having a given, low bacterial count are added; and that the cocoa particles are then uniformly distributed in the fat to form a smooth mass when worked in the mixer at a temperature of 40-95°C in the absence of air, while the fat content is raised to 45-60% by weight, whereupon a fineness of about 100 μm is imparted to the cocoa bean mass.

3. Process as claimed in claim 1 or 2, c h a r a c - t e r i s e d in that the sterilizer is a continuous autoclave having a temperature of 103 ± 2°C.

4. Process as claimed in any one of claims 1-3, c h a r a c t e r i s e d in that the sterilized cocoa particles are dried by means of sterile-filtrated hot

12

air to a temperature of about 80°C in the cocoa particles.

5. Process as claimed in any one of claims 1-4, c h a r a c t e r i s e d in that the hot particles are cooled by means of a vibrating cooler.

6. Process as claimed in claim 2, c h a r a c - t e r i s e d in that the temperature in the mixer is about 70°C.

7. Cocoa powder, c h a r a c t e r i s e d in that it has been produced from sterilized cocoa particles, and that its flavour and fat content have been adjusted by means of an edible fat and, optionally, other additives having a given, low bacterial count.

8. Cocoa powder as claimed in claim 7, c h a r a c - t e r i s e d in that the edible fat is cocoa butter having a given deodorization degree.

9. Cocoa bean mass, c h a r a c t e r i s e d in that it has been produced from sterilized cocoa particles having a fat content of 8-23% and an edible fat and, optionally, other additives having a given, low bacterial count.

10. Cocoa bean mass as claimed in claim 1, c h a - r a c t e r i s e d in that the edible fat is cocoa butter having a given deodorization degree.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-1 075 012 (H.L. RICARD) | | |
| A | GB-A-2 066 642 (K. BERKES et al.) | | |

TECHNICAL FIELDS SEARCHED (Int. Cl. ³)

The present search report has been drawn up for all claims

| Place of search | Date of completion of the search | Examiner |
|---|---|---|
| THE HAGUE | 12-10-1983 | GUYON R.H. |

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 997 680  (M.L. CHALIN)<br>* Claim 1;  example;  column 7, lines 46-64 * | 1-5,9 | A 23 G  1/02<br>A 23 G  1/04 |
| Y | US-A-3 868 469  (M.L. CHALIN)<br>* Figure 1;  claims  1,6,8,10; example; column 5, line 64 - column 6, line 2 * | 1-5,9 | |
| Y | FR-A-2 445 698  (NESTLE)<br>* Claims 1,5,6,8,9; figures 1-3 * | 1-3,9 | |
| A | DE-A-1 919 870  (T.A. ROHAN et al.) | | |
| A | EP-A-0 045 894  (F.J. GORDON et al.)<br>* Claims 1-4; example 1; page 1 * | 1,2,7 | **TECHNICAL FIELDS SEARCHED (Int. Cl. ³)** |
| A | DE-A-3 112 994  (BONORA BENITO) | | A 23 G |
| A | DE-A-3 111 352  (A. SCHMITT) | | |
| A | FR-A-2 154 576  (SUEKICHI SHIMATANI et al.) | | |
| A | US-A-3 754 928  (J.E. HANEY) | | |

--- -/-

The present search report has been drawn up for all claims

| Place of search<br>THE HAGUE | Date of completion of the search<br>12-10-1983 | Examiner<br>GUYON R.H. |
|---|---|---|